(19) Europäisches Patentamt / European Patent Office / Office européen des brevets

(11) **EP 4 386 625 A1**

(12) **EUROPEAN PATENT APPLICATION**

(43) Date of publication:
**19.06.2024 Bulletin 2024/25**

(21) Application number: **22212910.8**

(22) Date of filing: **12.12.2022**

(51) International Patent Classification (IPC):
**G06N 3/0455** (2023.01)    **G06N 3/047** (2023.01)
**G06N 3/0475** (2023.01)    **G06N 3/088** (2023.01)

(52) Cooperative Patent Classification (CPC):
**G06N 3/0455; G06N 3/047; G06N 3/0475;
G06N 3/088**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Robert Bosch GmbH
70442 Stuttgart (DE)**

(72) Inventor: **Schmitt, Felix
71640 Ludwigsburg (DE)**

Remarks:
Amended claims in accordance with Rule 137(2)
EPC.

(54) **TRAINING AN AUTOENCODER TO OBTAIN A GENERATIVE MODEL**

(57)    A system and method are provided for training an autoencoder on training data to obtain a generative model for synthesizing new data. During the training, an affine transformation 320 is applied to the output of the encoder 310 to obtain representations of the training data instances in the latent space. Furthermore, a mean and covariance of the representations of the training data instances in the latent space is determined, and parameters of the affine transformation are updated to shift the mean and covariance of the representations of the training data instances towards a target mean and a target covariance. The decoder 330 of the trained autoencoder may be used as generative model, for example to synthesize input data to a test or simulation of a system, device, or machine, or to synthesize training data for the training of a(nother) machine learnable model.

Fig. 4

EP 4 386 625 A1

**Description**

**FIELD OF THE INVENTION**

The invention relates to a system and computer-implemented method for training an autoencoder on training data to obtain a generative model for synthesizing new data. The invention further relates to a system and computer-implemented for synthesizing the new data using the decoder of the trained autoencoder as generative model. The invention further relates to a computer-readable medium comprising data representing instructions for a system to perform any computer-implemented method.

**BACKGROUND OF THE INVENTION**

A common task in machine learning is generative modeling, which involves developing a probability distribution model of given real-world samples. Such a generative model is intended to allow new data to be synthesized which follows (approximately) the same probability distribution as the real-world data. Data synthesis may be valuable in various application areas, in particular those where insufficient real-world data is available. For example, for the testing or training of machine learnable models in the field of autonomous driving, it is desirable to be able to use sensor data of so-called corner cases, which may represent unexpected and possible dangerous situations (e.g., near-accidents), to ensure the correct handling of such corner cases by machine learnable models. However, since such corner cases inherently occur only seldomly, little sensor data may be available for the testing or training. To address this problem, a generative model may be trained on the available sensor data and used to synthesize new sensor data of corner cases.

Among many different approaches for generative modeling, such as graphical models and generative adversarial networks, the family of variational auto-encoders (VAEs) has become a popular and effective tool for modelling complex distributions. A VAE comprises an encoder to map input data instances to representations in a latent space and a decoder to obtain reconstructed versions of the input data instances from the representations in the latent space. However, there are also problems with VAEs, such as the latent representations being insufficiently informative. This may hinder the synthesis of new data as it may be difficult or even impossible to generate sensible latent representations when synthesizing new data. References [1] and [2] propose deterministic autoencoder which address this problem to some degree. Namely, reference [1] proposes various regularization heuristics to induce a sensible distribution of the latent representations and to prevent collapse into a single latent code. However, the relative performance of individual regularization heuristics varies across data sets. As such, there is significant risk that a regularization heuristic just does not work on a new dataset. Reference [2] uses a Gaussian Mixture Model (GMM) prior which can also be used to induce a sensible distribution of the latent representations and to prevent collapse into a single latent code. However, to define the GMM, additional domain knowledge may be required, which is not available in many applications, such as when for example modeling driver behavior [3].

It would be advantageous to be able to train an autoencoder in a manner which addresses one or more of the above-mentioned drawbacks.

References

[1] Ghosh, Partha, et al. "From Variational to Deterministic Autoencoders", https://arxiv.org/abs/1903.12436.
[2] Saseendran, Amrutha, et al. "Shape your Space: A Gaussian Mixture Regularization Approach to Deterministic Autoencoders", Advances in Neural Information Processing Systems 34 (2021): 7319-7332.
[3] Suo, Simon, et al. "Trafficsim: Learning to simulate realistic multi-agent behaviors", https://arxiv.org/abs/2101.06557.

**SUMMARY OF THE INVENTION**

In accordance with a first aspect of the invention, a computer-implemented method and system are provided, as defined by claim 1 and 15 respectively, for training an autoencoder on training data. In accordance with a further aspect of the invention, a computer-readable medium is provided, as defined by claim 14, comprising instructions for causing a processor system to perform the computer-implemented method.

In accordance with the above measures, an autoencoder is trained on training data. The autoencoder may be a deterministic autoencoder which comprises an encoder and a decoder, with the encoder being configured to receive input data and encode the input data to a latent representation in a latent space and the decoder being configured to receive the latent representation and decode the latent representation to obtain a reconstructed version of the input data. As is known per se, the encoder and decoder may be trained on the training data, e.g., using mini-batches of the training data, by optimizing the parameters of the encoder and the decoder so as to reduce a reconstruction error between the input data and its reconstructed version. Autoencoders and their training in as far as described in this paragraph may be known per se.

Unlike known autoencoders, an affine transformation, which is also known as an affine whitening transformation, is applied to an output of the encoder during the training. This means that the latent representations which are output by the encoder are affine transformed to obtain further latent representations, and the further latent representations are then fed into the decoder, instead of the latent representations directly output by the encoder. The affine transformation may be a parameterized transformation of which the parameters may initially have default or random values. However, the parameters of the affine transformation may be optimized together with the training of the autoencoder, in that during the training of the autoencoder, a mean and covariance of the latent representations of the training data instances processed thus far may be determined, and the parameters of the affine transformation may be updated so that this mean and covariance is shifted towards a target. This may for example involve maintaining a running mean and running covariance and after the completion of each mini-batch of training data adjusting the parameters of the affine transformation.

This way, a sensible probability distribution of the latent representations is obtained, namely a probability distribution which has a desired mean and desired covariance, without running the risk, as in [1], that a given heuristic does not work on a novel dataset. In addition, unlike [2], no additional domain knowledge is required. Furthermore, the above measures are well suited for mini-batch optimization, where it can be guaranteed that the target mean and target covariance can be achieved, as will explained in more detail in the detailed description including a comparison to [2].

Optionally, the mean and the covariance are determined as a running mean and a running covariance across the subsets of the training data. By maintaining a running mean and running covariance during the training, the parameters of the affine transformation may be adjusted several times during the training so that when reaching the end of the training data, the mean and covariance of the latent representations of all the training data at least approximate the target mean and the target covariance.

Optionally, the target mean is zero. Optionally, the target covariance is an identity covariance. A zero mean, identify covariance is a suitable target.

Optionally, the updating of the parameters of the encoder and the decoder is further based on a regularization term which penalizes a deviation from a probability distribution defined by the target mean and the target covariance. The periodic updating of the affine transformation may not guarantee that the target mean and the target covariance are reached. To this end, an additional regularization term may be used in the training of the encoder and decoder which penalizes deviations from a probability distribution which is defined by the target mean and the target covariance.

Optionally, the regularization term is a loss term which is based on Kullback-Leibler divergence.

Optionally, the encoder and/or the decoder is a neural network. In a specific example, both the encoder and the decoder may be deep neural networks.

Optionally, the training data comprises audio data and/or image data. For example, the image data may be video data, radar data, LiDAR data, ultrasonic data, motion data, thermal image data, etc.

Optionally, after the training, the parameters of the affine transformation are output. The parameters of the affine transformation may be considered as auxiliary parameters of the trained autoencoder. By exporting the affine transformation's parameters, the affine transformation may be applied during use of the autoencoder, for example when using the autoencoder to detect outliers based on reconstruction loss.

In a further aspect of the invention, a method is provided of synthesizing new data using a decoder of an autoencoder as trained in a manner as described elsewhere in this specification. The method may comprise:

- sampling a latent space to obtain one or more samples, wherein the sampling assumes a probability distribution of the latent space which is defined by the target mean and the target covariance used during the training of the autoencoder; and
- feeding the one or more samples into the decoder to obtain one or more synthesized data instances.

The trained decoder may be used to synthesize new data which has a same or at least similar probability distribution as the input data on which the autoencoder was trained. For that purpose, the latent space of the autoencoder may be sampled by sampling from a probability distribution defined by the target mean and the target covariance. The samples may then be fed into the decoder to obtain synthesized data instances, such as synthetic image data instances or audio data instances.

Optionally, the one or more synthesized data instances are used as input data to a test or simulation of a system, device, or machine. The newly generated data may be used for data augmentation purposes, for example for testing or simulating a physical entity which may for example be a system, device, or machine.

Optionally, the one or more synthesized data instances are used as training data to train a machine learnable model.

In a further aspect of the invention, a method is provided of performing anomaly detection using an autoencoder as trained in a manner as described elsewhere in this specification. The method may comprise:

- obtaining input data;
- feeding the input data into the encoder to obtain a reconstructed version of the input data as output from the decoder;
- marking the input data as anomalous if the reconstructed version of the input data differs from the input data by more than a predetermined degree.

In a further aspect of the invention, a method is provided of performing anomaly detection using an encoder of an autoencoder as trained in a manner as described elsewhere in this specification. The method may comprise:

- obtaining input data;
- feeding the input data into the encoder to obtain representations of the input data in the latent space;
- marking the input data as anomalous if a probability distribution of the representations of the input data in the latent space deviate more than a predetermined amount from a probability distribution defined by the target mean and the target covariance used during the training of the autoencoder.

There may be two ways of performing anomaly detection using the autoencoder. One may involve using (only) the encoder of the trained autoencoder to determine if the probability distribution of the latent representations of input data differs more than a predetermined amount from the probability distribution defined by the target mean and the target covariance used during the training of the autoencoder. Another way may be to calculate the reconstruction loss of the full autoencoder when applied to the input data. Since the autoencoder has been trained to minimize the reconstruction loss on the training data, an excessive reconstruction loss may be indicative of the input data not sharing the same characteristics as the training data and thus representing an outlier with respect to the common characteristics of the training data instances.

It will be appreciated by those skilled in the art that two or more of the above-mentioned embodiments, implementations, and/or optional aspects of the invention may be combined in any way deemed useful.

Modifications and variations of any system, any computer-implemented method or any computer-readable medium, which correspond to the described modifications and variations of another one of said entities, can be carried out by a person skilled in the art on the basis of the present description.

## BRIEF DESCRIPTION OF THE DRAWINGS

These and other aspects of the invention will be apparent from and elucidated further with reference to the embodiments described by way of example in the following description and with reference to the accompanying drawings, in which

Fig. 1 shows a system for training an autoencoder on training data to obtain a generative model for synthesizing new data;

Fig. 2 shows steps of a computer-implemented method for training an autoencoder on training data to obtain a generative model for synthesizing new data;

Fig. 3 illustrates the training of the autoencoder, in which an affine transformation is applied to the latent representations generated by the encoder;

Fig. 4 illustrates the parameters of the affine transformation, and the parameters of the encoder and the decoder, being updated during the training;

Fig. 5 shows steps of a computer-implemented method of using the decoder of the trained autoencoder to synthesize new data for use in testing, simulation, or training;

Fig. 6 shows a computer-readable medium comprising data.

It should be noted that the figures are purely diagrammatic and not drawn to scale. In the figures, elements which correspond to elements already described may have the same reference numerals.

## List of reference numbers and abbreviations

The following list of reference numbers is provided for facilitating the interpretation of the drawings and shall not be construed as limiting the claims.

| | |
|---|---|
| 100 | system for training autoencoder on training data to obtain a generative model for synthesizing new data |
| 120 | processor subsystem |
| 140 | data storage interface |
| 150 | data storage |
| 152 | training data |
| 154 | data representation of autoencoder |
| 156 | synthesized data |
| 200 | method for training an autoencoder on training data to obtain a generative model for synthesizing new data |
| 210 | providing autoencoder |
| 220 | accessing training data |
| 230 | training autoencoder on training data |
| 240 | feeding training data into encoder |
| 250 | applying affine transformation to latent representations |
| 255 | determining mean and covariance |
| 260 | updating parameters of affine transformation |
| 270 | feeding latent representations into decoder |
| 280 | updating parameters of encoder and decoder |
| 290 | outputting data representation of decoder |
| 300 | input data instance |
| 310 | encoder |
| 312 | latent representation of training data instance |
| 320 | affine transformation |
| 322 | latent representation of training data instance after affine transformation |
| 330 | decoder |
| 340 | reconstructed version of training data instance |
| 350 | adjusting parameters of affine transformation |
| 360 | updating parameters of encoder and decoder |
| 400 | method of using decoder to synthesize the new data |
| 410 | providing trained decoder |
| 420 | obtaining latent representation through sampling of probability distribution |
| 430 | feeding latent representation into decoder to obtain synthetic data |
| 440 | repeat/loop |
| 450 | using synthetic data for testing, simulation, or training |
| 500 | non-transitory computer-readable medium |
| 510 | data |

## DETAILED DESCRIPTION OF EMBODIMENTS

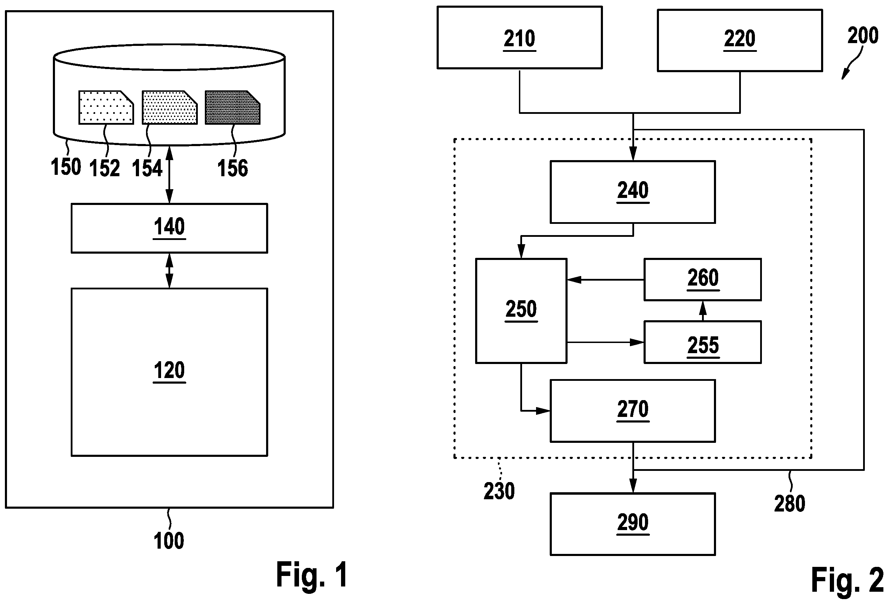

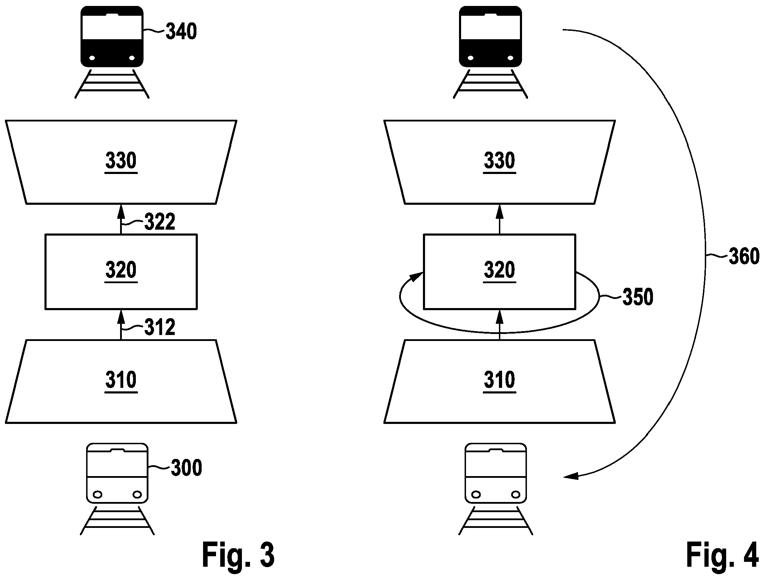

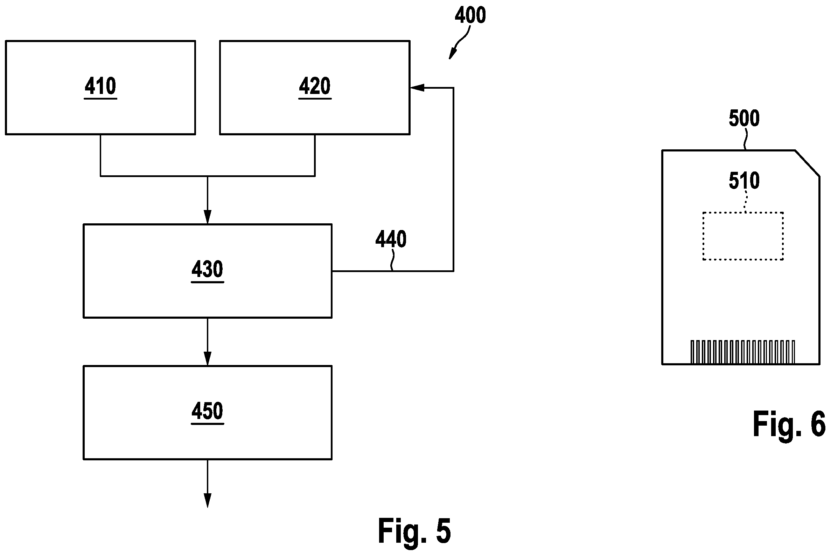

The following describes with reference to Figs. 1 and 2 a system and computer-implemented method for training an autoencoder on training data to obtain a generative model for synthesizing new data, with reference to Figs. 3 and 4 further aspects of the training of the autoencoder, and with reference to Fig. 5 a computer-implemented method of synthesizing new data using a decoder of the trained autoencoder. Fig. 6 shows a computer-readable medium used in embodiments of the invention as claimed.

**Fig. 1** shows a system 100 for training an autoencoder on training data to obtain a generative model for synthesizing new data. The system 100 may comprise an input interface subsystem for accessing training data 152 for the training. For example, as illustrated in Fig. 1, the input interface subsystem may comprise or be constituted by a data storage interface 140 which may provide access to training data 152 on a data storage 150. For example, the data storage interface 140 may be a memory interface or a persistent storage interface, e.g., a hard disk or an SSD interface, but also a personal, local, or wide area network interface such as a Bluetooth, Zigbee or Wi-Fi interface or an ethernet or fiberoptic interface. The data storage 150 may be an internal data storage of the system 100, such as a memory, hard drive, or SSD, but also an external data storage, e.g., a network-accessible data storage. In some embodiments, the data storage 150 may further comprise a data representation 154 of an autoencoder. It will be appreciated, however, that the training data 152 and the data representation 154 of the autoencoder may also each be accessed from a different data storage, e.g., via different data storage interfaces. Each data storage interface may be of a type as is described above for the data storage interface 140. In other embodiments, the data representation 154 of the autoencoder may be internally generated by the system 100, for example on the basis of design parameters or a design specification, and therefore may not explicitly be stored in the data storage 150.

The system 100 may further comprise a processor subsystem 120 which may be configured to, during operation of the system 100, train the autoencoder 154 on the training data 152 in the manner as described with reference to Fig. 2 et seq. In addition, the system 100 may comprise an output interface for outputting a data representation of the trained autoencoder or of components of the trained autoencoder. For example, as also illustrated in Fig. 1, the output interface may be constituted by the data storage interface 140, with said interface being in these embodiments an input/output ('IO') interface via which the trained autoencoder may be stored in the data storage 150. For example, the data representation 154 defining an untrained or incompletely trained autoencoder may during or after the training be replaced, at least in part, by a data representation of the trained autoencoder, in that the parameters of the autoencoder, in particular parameters of the encoder and decoder, may be adapted to reflect the training on the training data 152. In other embodiments, the data representation of the trained autoencoder may be stored separately from the data representation 154 of the 'untrained' autoencoder. In some embodiments, the output interface may be separate from the data storage interface 140 but may in general be of a type as described above for the data storage interface 140.

In some embodiments, the system 100 of Fig. 1 may represent a system 100 for synthesizing new data using the decoder of the trained autoencoder in the manner as described with reference to, amongst others, Fig. 5. In such embodiments, the data storage interface 140 may be configured to provide access to a data representation of at least the decoder of the trained autoencoder. As shown in Fig. 1, synthesized data 156 may then be stored in the data storage 150 but may also be stored or output in a different manner. The system 100 may in such embodiments also be configured to use the synthesized data 156, for example by performing a test or a simulation of a system, device, or machine. Another example may be that the system 100 may train a machine learnable model other than the autoencoder using the synthesized data as training data. In some embodiments, the system 100 may be configured to both train the autoencoder and use the autoencoder to generate new data and in some case to use the new data for one of the aforementioned purposes.

**Fig. 2** shows a computer-implemented method 200 for training an autoencoder on training data to obtain a generative model for synthesizing new data. The method 200 may correspond to an operation of the system 100 of Fig. 1, but does not need to, in that it may also correspond to an operation of another type of system, apparatus, device or entity or in that it may correspond to steps of a computer program.

The method 200 is shown to comprise, in a step titled "PROVIDING AUTOENCODER", providing 210 an autoencoder comprising an encoder to map input data instances to representations in a latent space and a decoder to obtain reconstructed versions of the input data instances from the representations in the latent space, in a step titled "ACCESSING TRAINING DATA", accessing 220 training data comprising a plurality of training data instances, and in a step titled "TRAINING AUTOENCODER ON TRAINING DATA", training 230 the autoencoder on the training data. The training may comprise, for a respective subset of the training data, in a step titled "FEEDING TRAINING DATA INTO ENCODER", feeding 240 training data instances from the subset into the encoder and obtaining representations of the training data instances in the latent space from output of the encoder, in a step titled "APPLYING AFFINE TRANSFORMATION TO LATENT REPRESENTATIONS", applying 250 an affine transformation to the output of the encoder to obtain the representations of the training data instances in the latent space, in a step titled "DETERMINING MEAN AND COVARIANCE", determining 255 a mean and covariance of the representations of the training data instances in the latent space, in a step titled "UPDATING PARAMETERS OF AFFINE TRANSFORMATION", updating 260 parameters of the affine transformation to shift the mean and covariance of the representations of the training data instances towards a target mean and a target covariance, and in a step tilted "FEEDING LATENT REPRESENTATIONS INTO DECODER", feeding 270 the representations of the training data instances into the decoder to obtain reconstructed versions of the training data instances. The method 200 is further shown to comprise, in a step titled "UPDATING PARAMETERS OF ENCODER AND DECODER", determining a reconstruction loss based on differences between the training data instances and the reconstructed versions of the training data instances, and based on the reconstruction loss, updating 280 parameters of the encoder and the decoder so as to reduce the reconstruction loss, and in a step titled "OUTPUTTING DATA REPRESENTATION OF DECODER", after the training, outputting 290 a data representation of the decoder for use as generative model to synthesize new data based on a sampling of the latent space. The training 230 may comprise a number of iterations to loop over different subsets of the training data, as shown by arrow 280 in Fig. 2 which at the same time represents the aforementioned updating step.

With continued reference to the training of the autoencoder, the following is noted. A common task in machine learning is generative modeling, that is, developing a probability distribution model of given real world samples. Preferably, a generative model should allow to easily generate new samples following (approximately) the same probability distribution as the real-world data. Among many different approaches such as graphical models and generative adversarial networks, the family of variational auto-encoders (VAE)s has become a very popular and effective tool for modelling complex distributions. The variational auto encoding approach is based on the assumption that the data distribution $x \sim p(.\,|z)$ is mainly determined by a latent variable z which follows a prior distribution p(z). While the latent codes (elsewhere also simply referred to as 'latent representations') z are not contained in the data, the distribution p(z) is typically assumed to be a known Gaussian. $p(x|z)$ may be learned by considering the posterior $p(z|x)$. That is, $p(x|z)$ may be modeled by a decoder network $g_\theta(x,z)$ and $p(z|x)$ may be modelled by an encoder network $h_\psi(z,x)$, which both may be trained minimizing the Evidence Lower Bound (ELBO) $ELBO(x, \theta, \psi) = -\lambda KL(h_\psi(z,x)\|p(z)) + E_{z \sim h_\psi(.,x)}[log(g_\theta(x,z))]$ with a weight parameter $\lambda$.

While being superior to alternative generative models, VAEs still have limitations. For example, VAEs may suffer from over-regularization which requires careful tuning of the weight A of the Kullback-Leibler (KL) loss term. Furthermore, the computation of the ELBO may involve drawing random variables $z \sim h_\psi(.,x)$ which may introduce additional randomness into the mini-batch training and consequently makes it more brittle than standard mini-batch neural network training. As an alternative, reference [1] proposes deterministic autoencoders where the decoder network $x = g_\theta(z)$ and the encoder network $z = h_\psi(x)$ are deterministic functions which are trained by a loss $l(x, \theta, \psi) = \Delta (x - g_\theta(h_\psi(x))) + \rho(g_\theta h_\psi)$ which is comprised of a reconstruction loss $\Delta (x - g_\theta(h_\psi(x)))$ (e.g., squared loss) and a regularization term $\rho(g_\theta h_\psi)$ (e.g., squared norm of the networks' gradients or squared norm of parameters $\theta, \psi$). This loss may be combined with ex-post density estimation, meaning that once the encoder-decoder pair has been trained, the predicted codes $\hat{z} = h_\psi(x)$ for all the training data may be collected and a simple generative model such as a Gaussian-Mixture-Model (GMM) may be fitted to the set $\{\hat{z}\}$ of codes. New samples may be drawn by first sampling $\hat{z}$ from the fitted GMM model and then feeding the sample through the decoder $\hat{z} = g_\theta(\hat{z})$, thereby obtaining synthesized data instances for further use. The authors of reference [2] extend on the idea of the deterministic autoencoder. Here, a loss $\rho(g_\theta h_\psi) = \rho(h_\psi(x)) = \rho_1(h_\psi(x)) + \rho_2(h_\psi(x))$ is proposed where the first part penalizes deviation of the cumulative density function of the marginals $p(\hat{z_i})$ of the predicted latent codes $\hat{z} = h_\psi(x)$ from the cumulative density function of the marginals $p(z_i)$ of an assumed prior Gaussian Mixture Model. The second part penalizes the deviation of the covariance of the predicted codes from the covariance of the prior Gaussian Mixture Model. The approach described in [2] demonstrated improve sample quality.

The autoencoder as described in this specification may also be considered a deterministic autoencoder, but which allows using a simple and uninformative zero mean, identity covariance Gaussian prior. A zero mean, identity covariance Gaussian prior has been demonstrated to be quite effective in complex real-world applications such as modeling human driver behavior [3]. However, even for this simple distribution and typical discrepancy measures such as the KL or the Wasserstein distance or Hellinger distance, a general closed form formular for arbitrary continuous distributions is not known. Hence, the goal of exactly matching the prior distribution p(z) by the distribution of the predicted latent codes $p(\hat{z})$ may be relaxed, and instead, only the mean and covariance of the predicted latent codes may be matched with the prior, i.e., moment matched. If the distribution of the latent codes $p(\hat{z})$ is a Gaussian, this moment matching results in perfect distribution matching.

To obtain the zero mean, identity covariance Gaussian prior, an affine transformation may be used of which the parameters may be adjusted during training of the autoencoder so that the predicted latent codes of the training data have approximately zero mean and identity covariance. This may for example involve training the autoencoder on mini-batches of training data, keeping a running mean and running co-variance across the mini-batches, and adjusting the parameters of the affine transformation in-between the mini-batches so that once the training has passed over the entire training data, the affine transformation's parameters are such that they yield an approximately zero mean and identity covariance for the predicted latent codes of the entire training data. This affine transformation may be used with a regularization loss on the mean and the covariance of latent codes, and a simple scheduler for the regularization loss that ensures that the iterative optimization over reconstruction and weighted regularization loss finally results in accurate moment-matching. The affine transformation, the regularization loss term and the scheduler typically easily fit into a standard deep learning training workflow and thereby enable an encoder and decoder pair to be trained that induces a latent code distribution with zero mean and identity covariance. When synthesizing samples using the trained autoencoder, latent codes may either be sampled from a zero mean identity covariance Gaussian or by a post-hoc estimated Gaussian Mixture Model similarly as proposed in reference [1].

In general, after training, the encoder may be used to predict latent codes of given input data and may be used to detect outliers by comparing the predicted latent codes to the prior distribution. The decoder may be used to synthesize new in-distribution data by first sampling from the prior and then decoding the samples by feeding the samples into the decoder. This new data may be used in for example the context of data augmentation or for simulation-based validation. Another way to detect outliers may be by passing input data through both the encoder and the decoder and calculating the reconstruction loss. If this reconstruction loss is too large, then the input data may be considered an outlier.

With continued reference to the training of the autoencoder, it is noted that it is an important task in deterministic autoencoders to force the distribution of the predicted latent codes $p(\hat{z})$ with $\hat{z} = h_\psi(x)$ towards a sensible prior distribution p(z). In the following, measures are described that force the distribution towards an uninformative zero mean and identity covariance Gaussian prior. In particular, instead of forcing the entire predictive distribution $p(\hat{z})$ towards the prior, the following measures may only be applied to the mean and the covariance of the predictive distribution. While this might not lead to full prior matching, an important advantage is that the loss computation is possible in closed form whereas full distribution losses in general require some approximation procedure.

It is noted that for any distribution $p(\hat{z})$ with finite mean $\mu$ and covariance $\Sigma$, there exist multiple affine so-called whitening transformations $T(\hat{z} - t)$ such that $p(T(\hat{z} - t))$ has zero mean and identity covariance, such as for example $t = \mu$ and $T$ being the inverse of the Cholesky factor $\Sigma^{-\frac{1}{2}}$. Given an initially trained encoder $\hat{z} = h_\psi(x)$, the mean and the covariance of the latent codes of the training data may be obtained by a single pass over the entire training data. Having determined the mean and the covariance, an affine transformation may be determined which maps the mean and the covariance to the zero mean and identity covariance. With this affine transformation in place, the autoencoder may then be trained again on the training data. Alternatively, as also described elsewhere in this specification, the parameters of the affine transformation may also be approximated during the training of the encoder using a rolling approach, such as an exponential rolling average. In general, using the affine whitening transform, the autoencoder may take the form of $g_\theta(T(h_\psi(x) - t))$ with $T(h_\psi(x) - t)$ being the predicted latent codes.

The place of the affine transformation during training is illustrated in Fig. 3, which shows the encoder 310 receiving an input data instance 300, such as an image, and outputting a latent representation 312 of the input data instance, i.e., a latent code. The latent representation is then transformed by the affine transformation 320 to obtain another latent representation 322, which is then fed into the decoder 330 to produce a reconstructed version of the input data instance 340. Fig. 4 further illustrates that during the training, during which parameters of the encoder and the decoder are updated 360 in a manner as known per se, parameters of the affine transformation 320 may be adjusted 350, for example to force the running mean and running covariance to the zero mean and identity covariance.

It is noted that when updating the affine transformation during training, there is no guarantee that the final distribution of predicted latent codes $p(T(h_\psi(x) - t))$ is very close to the desired zero mean and identity covariance. Furthermore, it might be desirable to stabilize training by also providing an explicit training signal to the encoder that targets the desired mean and covariance of the output distribution. Hence, additional regularization of the predicted latent codes may be used. Given the empirical mean and covariance

$$\hat{\mu}(\{\hat{z}\}) = \frac{1}{|\{\hat{z}\}|} \sum_{\hat{z} \in \{\hat{z}\}} \hat{z}$$

$$\hat{\Sigma}(\{\hat{z}\}) = \frac{1}{|\{\hat{z}\}| - 1} \sum_{\hat{z} \in \{\hat{z}\}} \left(\hat{z} - \hat{\mu}(\{\hat{z}\})\right)\left(\hat{z} - \hat{\mu}(\{\hat{z}\})\right)^T$$

of the predicted codes in a batch, the regularization loss is given as

$$L_{\text{reg}}(\{\hat{z}\}) = \frac{1}{2}\left(\frac{|\{\hat{z}\}| - 1}{|\{\hat{z}\}|} tr\left(\hat{\Sigma}(\{\hat{z}\})\right) - k + \hat{\mu}(\{\hat{z}\})^T \hat{\mu}(\{\hat{z}\}) - \log\det\left(\hat{\Sigma}(\{\hat{z}\})\right)\right)$$

where $|\{\hat{z}\}|$ is the batch size and where k is the dimensionality of z. This loss is sensible because if $|\{\hat{z}\}|$ goes to infinity it holds

$$L_{\text{reg}}(\{\hat{z}\}) = \frac{1}{2}\left(tr\left(\hat{\Sigma}(\{\hat{z}\})\right) - k + \hat{\mu}(\{\hat{z}\})^T \hat{\mu}(\{\hat{z}\}) - \log\det\left(\hat{\Sigma}(\{\hat{z}\})\right)\right)$$

which is uniquely minimized by $\hat{\mu}(\{\hat{z}\}) = 0$ and $\hat{\Sigma}(\{\hat{z}\}) = I$. That is, the loss can only be optimized by reaching the desired zero mean and identity covariance. In case $L_{\text{reg}}(\{\hat{z}\})$ is optimized on small mini-batches as commonly done in autoencoder training [1], [2], the factor $\frac{|\{\hat{z}\}| - 1}{|\{\hat{z}\}|}$ makes sure that mini-batch optimization targets the same objective as full training set optimization. This is because even for 2 being distributed according to mean $\hat{\mu}$ and $\hat{\Sigma}$, the expected loss $E_{p(\hat{z})}[L_{\text{reg}}(\{\hat{z}\})]$ is given as

$$E_{p(\hat{z})}[L_{\text{reg}}(\{\hat{z}\})] = \frac{1}{2}\left(\frac{|\{\hat{z}\}| - 1}{|\{\hat{z}\}|} tr(\hat{\Sigma}) - k + \hat{\mu}^T \hat{\mu} + \frac{1}{|\{\hat{z}\}|} tr(\hat{\Sigma}) - \log\det(\hat{\Sigma}) + C\right)$$

with constant C. If the $\frac{|\{\hat{z}\}|-1}{|\{\hat{z}\}|}$ correction were not applied, the mini-batch optimization may be biased towards a small covariance of the latent codes.

The encoder-decoder pair may thus be trained on the sum of losses $l(x,\theta,\psi) = \Delta(x - g_\theta(h_\psi(x))) + \lambda L_{reg}(T(h_\psi(x) - t))$ where $\Delta$ is any established reconstruction loss, e.g., a L2 loss, and where $\lambda$ is the weight of the latent space regularization. For the autoencoder as described in this specification, $\lambda$ is preferably set to a small value initially, e.g., 0.001, and gradually increased, e.g., by a factor of 10, over the course of the training. As a variant of the penalty method for constrained optimization, this procedure may ensure that mean and covariance are closely matched after the training.

In general, the autoencoder described in this specification may receive an input data instance, such as an image, and try to reconstruct the image after passing it through a latent space bottleneck. To this end, the autoencoder may map the input space onto a latent space of reduced dimension, and then back to the original space. In particular, an encoder, which may for example be a neural network, may map the input data to an intermediate latent space data. Using an estimated affine whitening transformation, the latent code in this intermediate latent space may be mapped to the final latent space. The latent state data may then be input into a decoder, which may for example be a neural network, to obtain a reconstructed version of the input data instance, e.g., a reconstructed image. The encoder or the decoder or both may for example be given by deep neural networks, but any other differentiable model can also be used. During training, the parameters of the affine transformation may be updated, and the encoder decoder pair may be trained to minimize a linear combination of reconstruction error and regularization.

**Example of training algorithm**

1. Randomly initialize encoder parameters $\theta$, decoder parameters $\psi$, tracked mean $\mu$ and covariance $\Sigma$, affine transformation parameters $T, t$, momentum $\beta$
2. For several epochs

   a. Train on a mini batch

      i. Sample batch of training data $\{x\}$
      ii. Predict latent codes $\{\hat{z}\}$ according to $\hat{z} = T(h_\psi(x) - t))$ using encoder and affine transform
      iii. Get mini batch mean and covariance of latent codes

         1.

$$\hat{\mu}(\{\hat{z}\}) = \frac{1}{|\{\hat{z}\}|}\sum_{\hat{z}\in\{\hat{z}\}}\hat{z}$$

         2.

$$\hat{\Sigma}(\{\hat{z}\}) = \frac{1}{|\{\hat{z}\}|-1}\sum_{\hat{z}\in\{\hat{z}\}}\left(\hat{z} - \hat{\mu}(\{\hat{z}\})\right)\left(\hat{z} - \hat{\mu}(\{\hat{z}\})\right)^T$$

      iv. Obtain reconstructed initial data $\{\hat{x}\}$ using decoder $\hat{x} = g_\theta(\hat{z})$
      v. Perform gradient-based updated using loss $\sum_{(x,\hat{x})}\Delta(x - \hat{x}) +$

$$\lambda\frac{1}{2}\left(\frac{|\{\hat{z}\}|-1}{|\{\hat{z}\}|}tr\left(\hat{\Sigma}(\{\hat{z}\})\right) - k + \hat{\mu}(\{\hat{z}\})^T\hat{\mu}(\{\hat{z}\}) - \log\det\left(\hat{\Sigma}(\{\hat{z}\})\right)\right)$$

      vi. Update tracked mean $\mu = (1 - \beta)\mu + \beta\hat{\mu}(\{h_\psi(x)\})$ and $\Sigma = (1 - \beta)\Sigma + \beta\hat{\Sigma}(\{h_\psi(x)\})$

      vii. Update affine transformation $t = \mu, T = \Sigma^{-\frac{1}{2}}$

   b. Update loss weight $\lambda$ by any schedule from [12]

3. (Optionally) perform post-hoc density estimation as in [5]

**Example of reconstruction algorithm**

1. Given encoder parameters $\theta$, decoder parameters $\psi$, affine transformation parameters $T, t$
2. For given input data points

    a. Predict latent code $\hat{z} = T(h_\psi(x) - t))$ using encoder and affine transform
    b. Obtain reconstructed initial data $\hat{x} = g_\theta(\hat{z})$

**Example of sampling algorithm**

1. Given decoder parameters $\psi$, (optional) post-hoc estimated latent state space density $q(\hat{z})$
2. For desired number of samples

    a. If post-hoc estimated latent state space density $q(\hat{z})$ is given, sample $\hat{z}$ from $q(\hat{z})$. Else sample $\hat{z}$ from Gaussian with zero mean and identity covariance.
    b. Obtain new data $\hat{x} = g_\theta(\hat{z})$ using the decoder

It is noted that while the affine transformation is described to be used to obtain an approximately zero mean, identity covariance of the probability distribution of the latent space, any other target mean and target covariance may be used as well.

**Fig. 5** shows a computer-implemented method 400 for training an autoencoder on training data to obtain a generative model for synthesizing new data. The method 400 may correspond to an operation of the system 100 of Fig. 1, but does not need to, in that it may also correspond to an operation of another type of system, apparatus, device or entity or in that it may correspond to steps of a computer program.

The method 400 is shown to comprise, in a step titled "PROVIDING TRAINED DECODER", providing 410 a decoder of a trained autoencoder as described elsewhere in this specification, in a step titled "OBTAINING LATENT REPRESENTATION THROUGH SAMPLING OF PROBABILITY DISTRIBUTION", sampling 420 a latent space to obtain one or more samples, wherein the sampling assumes a latent sample distribution defined by a target mean and a target covariance, and in a step titled "FEEDING LATENT REPRESENTATION INTO DECODER TO OBTAIN SYNTHETIC DATA", feeding 430 the one or more samples into the decoder to obtain one or more synthesized data instances. The method 400 may comprise a number of iterations to generate several new data instances, as shown by arrow 440 in Fig. 5. The method 400 is further shown to comprise, in a step titled "USING SYNTHETIC DATA FOR TESTING, SIMULATION, OR TRAINING", using 450 the synthetic data for testing, simulation, or training. For example, the method 400 may comprise, in step 450, testing or simulating a system, device, or machine using the one or more synthesized data instances. Another example is that step 450 may comprise training a machine learnable model using the synthesized data instance(s) as training data.

In general, each system described in this specification, including but not limited to the system 100 of Fig. 1, may be embodied as, or in, a single device or apparatus, such as a workstation or a server. The device may be an embedded device. The device or apparatus may comprise one or more microprocessors which execute appropriate software. For example, the processor subsystem of the respective system may be embodied by a single Central Processing Unit (CPU), but also by a combination or system of such CPUs and/or other types of processing units. The software may have been downloaded and/or stored in a corresponding memory, e.g., a volatile memory such as RAM or a non-volatile memory such as Flash. Alternatively, the processor subsystem of the respective system may be implemented in the device or apparatus in the form of programmable logic, e.g., as a Field-Programmable Gate Array (FPGA). In general, each functional unit of the respective system may be implemented in the form of a circuit. The respective system may also be implemented in a distributed manner, e.g., involving different devices or apparatuses, such as distributed local or cloud-based servers. In some embodiments, the system 100 may be part of a testing or simulation system configured to test a physical entity or a manufacturing process or may be part of a data analysis system. In other embodiments, the system 100 may be part of a training system configured to a train machine learnable model.

It will be appreciated that, in general, the operations or steps of the computer-implemented methods 200 and 400 of respectively Figs. 2 and 5 may be performed in any suitable order, e.g., consecutively, simultaneously, or a combination thereof, subject to, where applicable, a particular order being necessitated, e.g., by input/output relations.

Each method, algorithm or pseudo-code described in this specification may be implemented on a computer as a computer implemented method, as dedicated hardware, or as a combination of both. As also illustrated in Fig. 6, instructions for the computer, e.g., executable code, may be stored on a computer-readable medium 500, e.g., in the form of a series 510 of machine-readable physical marks and/or as a series of elements having different electrical, e.g., magnetic, or optical properties or values. The executable code may be stored in a transitory or non-transitory manner. Examples of computer-readable mediums include memory devices, optical storage devices, integrated circuits, servers, online software, etc. Fig. 6 shows a memory card 500. In an alternative embodiment, the computer-readable medium 500 may comprise the data representation of the trained autoencoder or its decoder, or synthesized data instances, as described elsewhere in this specification.

Examples, embodiments or optional features, whether indicated as nonlimiting or not, are not to be understood as limiting the invention as claimed.

Mathematical symbols and notations are provided for facilitating the interpretation of the invention and shall not be construed as limiting the claims.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or stages other than those stated in a claim. The article "a" or "an" preceding an element does not exclude the presence of a plurality of such elements. Expressions such as "at least one of" when preceding a list or group of elements represent a selection of all or of any subset of elements from the list or group. For example, the expression, "at least one of A, B, and C" should be understood as including only A, only B, only C, both A and B, both A and C, both B and C, or all of A, B, and C. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A computer-implemented method (200) of training an autoencoder on training data to obtain a generative model for synthesizing new data, comprising:

   - providing (210) an autoencoder comprising an encoder to map input data instances to representations in a latent space and a decoder to obtain reconstructed versions of the input data instances from the representations in the latent space;
   - accessing (220) training data comprising a plurality of training data instances;
   - training (230) the autoencoder on the training data, wherein the training comprises, for a respective subset of the training data:

      - feeding (230) training data instances from the subset into the encoder and obtaining representations of the training data instances in the latent space from output of the encoder;
      - feeding (270) the representations of the training data instances into the decoder to obtain reconstructed versions of the training data instances;
      - determining a reconstruction loss based on differences between the training data instances and the reconstructed versions of the training data instances;
      - based on the reconstruction loss, updating (280) parameters of the encoder and the decoder so as to reduce the reconstruction loss;

   wherein the method further comprises:

      - applying (250) an affine transformation to the output of the encoder to obtain the representations of the training data instances in the latent space;
      - determining (255) a mean and covariance of the representations of the training data instances in the latent space;
      - updating (260) parameters of the affine transformation to shift the mean and covariance of the representations of the training data instances towards a target mean and a target covariance;

   - after the training, outputting (290) at least a data representation of the decoder for use as generative model to synthesize new data based on a sampling of the latent space.

2. The method (200) according to claim 1, wherein the method further comprises determining the mean and the covariance as a running mean and a running covariance across the subsets of the training data.

3. The method (200) according to claim 1 or 2, wherein the target mean is zero.

4. The method (200) according to any one of claims 1 to 3, wherein the target covariance is an identity covariance.

5. The method (200) according to any one of claims 1 to 4, wherein the updating (280) of the parameters of the encoder and the decoder is further based on a regularization term which penalizes a deviation from a Gaussian probability distribution defined by the target mean and the target covariance.

6. The method (200) according to claim 5, wherein the regularization term is a loss term which is based on Kullback-Leibler divergence.

7. The method (200) according to any one of claims 1 to 6, wherein the encoder and/or the decoder is a neural network.

8. The method (200) according to any one of claims 1 to 7, wherein the training data comprises audio data and/or image data.

9. The method (200) according to any one of claims 1 to 8, further comprising, after the training, outputting the parameters of the affine transformation.

10. A computer-implemented method (400) of synthesizing new data using a decoder of an autoencoder as trained by any one of claims 1 to 9, comprising:

   - sampling (420) a latent space to obtain one or more samples, wherein the sampling assumes a probability distribution of the latent space which is defined by the target mean and the target covariance used during the training of the autoencoder;
   - feeding (430) the one or more samples into the decoder to obtain one or more synthesized data instances.

11. The method (400) according to claim 10, further comprising using (450) the one or more synthesized data instances as input data to a test or simulation of a system, device, or machine.

12. The method (400) according to claim 10, further comprising using (450) the one or more synthesized data instance as training data to train a machine learnable model.

13. A computer-implemented method of performing anomaly detection using an encoder of an autoencoder as trained by any one of claims 1 to 9, comprising:

   - obtaining input data;
   - feeding the input data into the encoder to obtain representations of the input data in the latent space;
   - marking the input data as anomalous if a probability distribution of the representations of the input data in the latent space deviate more than a predetermined amount from a probability distribution defined by the target mean and the target covariance used during the training of the autoencoder.

14. A transitory or non-transitory computer-readable medium (500) comprising data (510) representing instructions arranged to cause a processor system to perform the computer-implemented method according to any one of claims 1 to 13.

15. A system (100) configured to perform the computer-implemented method according to any one of claims 1 to 13.

**Amended claims in accordance with Rule 137(2) EPC.**

1. A computer-implemented method (200) of training an autoencoder on training data to obtain a generative model for synthesizing new data, comprising:

- providing (210) an autoencoder comprising an encoder to map input data instances to representations in a latent space and a decoder to obtain reconstructed versions of the input data instances from the representations in the latent space;
- accessing (220) training data comprising a plurality of training data instances;
- training (230) the autoencoder on the training data, wherein the training comprises, for a respective subset of the training data:
- feeding (230) training data instances from the subset into the encoder and obtaining representations of the training data instances in the latent space from output of the encoder;
- feeding (270) the representations of the training data instances into the decoder to obtain reconstructed versions of the training data instances;
- determining a reconstruction loss based on differences between the training data instances and the reconstructed versions of the training data instances;
- based on the reconstruction loss, updating (280) parameters of the encoder and the decoder so as to reduce the reconstruction loss;

wherein the method further comprises:

- applying (250) an affine transformation to the output of the encoder to obtain the representations of the training data instances in the latent space;
- determining (255) a mean and covariance of the representations of the training data instances in the latent space;
- updating (260) parameters of the affine transformation to shift the mean and covariance of the representations of the training data instances towards a target mean and a target covariance;
- after the training, outputting (290) at least a data representation of the decoder for use as generative model to synthesize new data based on a sampling of the latent space.

2. The method (200) according to claim 1, wherein the method further comprises determining the mean and the covariance as a running mean and a running covariance across the subsets of the training data.

3. The method (200) according to claim 1 or 2, wherein the target mean is zero.

4. The method (200) according to any one of claims 1 to 3, wherein the target covariance is an identity covariance.

5. The method (200) according to any one of claims 1 to 4, wherein the updating (280) of the parameters of the encoder and the decoder is further based on a regularization term which penalizes a deviation of a probability distribution of the representations of the training data instances from a Gaussian probability distribution defined by the target mean and the target covariance.

6. The method (200) according to claim 5, wherein the regularization term is a loss term which is based on Kullback-Leibler divergence.

7. The method (200) according to any one of claims 1 to 6, wherein the encoder and/or the decoder is a neural network.

8. The method (200) according to any one of claims 1 to 7, wherein the training data comprises audio data and/or image data.

9. The method (200) according to any one of claims 1 to 8, further comprising, after the training, outputting the parameters of the affine transformation.

10. A computer-implemented method (400) of synthesizing new data using a decoder of an autoencoder as trained by any one of claims 1 to 9, comprising:

- sampling (420) a latent space to obtain one or more samples, wherein the sampling assumes a probability distribution of the latent space which is defined by the target mean and the target covariance used during the training of the autoencoder;
- feeding (430) the one or more samples into the decoder to obtain one or more synthesized data instances.

11. The method (400) according to claim 10, further comprising using (450) the one or more synthesized data instances as input data to a test or simulation of a system, device, or machine.

12. The method (400) according to claim 10, further comprising using (450) the one or more synthesized data instance as training data to train a machine learnable model.

13. A computer-implemented method of performing anomaly detection using an encoder of an autoencoder as trained by any one of claims 1 to 9, comprising:

   - obtaining input data;
   - feeding the input data into the encoder to obtain representations of the input data in the latent space;
   - marking the input data as anomalous if a probability distribution of the representations of the input data in the latent space deviate more than a predetermined amount from a probability distribution defined by the target mean and the target covariance used during the training of the autoencoder.

14. A transitory or non-transitory computer-readable medium (500) comprising data (510) representing instructions arranged to cause a processor system to perform the computer-implemented method according to any one of claims 1 to 13.

15. A system (100) configured to perform the computer-implemented method according to any one of claims 1 to 13.

**Fig. 1**

**Fig. 2**

EP 4 386 625 A1

Fig. 4

Fig. 3

**Fig. 5**

**Fig. 6**

EP 4 386 625 A1

Europäisches
Patentamt

European
Patent Office

Office européen
des brevets

# EUROPEAN SEARCH REPORT

Application Number

EP 22 21 2910

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | IRINA HIGGINS ET AL: "beta-VAE: Learning Basic Visual Concepts with a Constrained Variational Framework", NEURAL NETWORKS., 24 April 2017 (2017-04-24), XP055511799, GB ISSN: 0893-6080 * page 3 - page 5 * * Section 4 * * Appendix A1 * | 1-15 | INV. G06N3/0455 G06N3/047 G06N3/0475 G06N3/088 |
| X | ZHI CHEN ET AL: "Concept Whitening for Interpretable Image Recognition", ARXIV.ORG, CORNELL UNIVERSITY LIBRARY, 201 OLIN LIBRARY CORNELL UNIVERSITY ITHACA, NY 14853, 7 December 2020 (2020-12-07), XP081830532, DOI: 10.1038/S42256-020-00265-Z * page 2 * * Sections 3 and 4 * | 1-15 | |
| A | WU JIHUA ET AL: "Probability Correlation Learning for Anomaly Detection based on Distribution-Constrained Autoencoder", 2022 23RD ASIA-PACIFIC NETWORK OPERATIONS AND MANAGEMENT SYMPOSIUM (APNOMS), IEICE, 28 September 2022 (2022-09-28), pages 1-6, XP034215588, DOI: 10.23919/APNOMS56106.2022.9919908 [retrieved on 2022-10-28] * the whole document * | 13 | TECHNICAL FIELDS SEARCHED (IPC) G06N |

-/--

The present search report has been drawn up for all claims

| Place of search | Date of completion of the search | Examiner |
|---|---|---|
| The Hague | 11 May 2023 | Jacobs, Jan-Pieter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                                                                               
& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 22 21 2910

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | HUANGI LEI ET AL: "Decorrelated Batch Normalization", 2018 IEEE/CVF CONFERENCE ON COMPUTER VISION AND PATTERN RECOGNITION, IEEE, 18 June 2018 (2018-06-18), pages 791-800, XP033476040, DOI: 10.1109/CVPR.2018.00089 [retrieved on 2018-12-14] * the whole document * | 1-15 | |

-----

TECHNICAL FIELDS
SEARCHED       (IPC)

The present search report has been drawn up for all claims

| Place of search | Date of completion of the search | Examiner |
|---|---|---|
| The Hague | 11 May 2023 | Jacobs, Jan-Pieter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **GHOSH, PARTHA et al.** *From Variational to Deterministic Autoencoders, https://arxiv.org/abs/1903.12436*
- **SASEENDRAN, AMRUTHA et al.** Shape your Space: A Gaussian Mixture Regularization Approach to Deterministic Autoencoders. *Advances in Neural Information Processing Systems,* 2021, vol. 34, 7319-7332
- **SUO, SIMON et al.** *Trafficsim: Learning to simulate realistic multi-agent behaviors, https://arxiv.org/abs/2101.06557*